# FASCICULE DE BREVET EUROPEEN

(11) **EP 3 749 539 B1**
(45) Date de publication et mention de la délivrance du brevet: **25.01.2023**
(21) Numéro de dépôt: 19708139.1
(22) Date de dépôt: 31.01.2019
(51) Int. Cl.: B60K 15/04, B60K 15/05

(54) **ENSEMBLE D'ALIMENTATION EN CARBURANT OU EN PRODUIT DE DEPOLLUTION D'UN VEHICULE AUTOMOBILE**
EINFÜLLBAUGRUPPE FÜR KRAFTSTOFF ODER REINIGUNGSMITTEL EINES KRAFTFAHRZEUGS
FILLER ASSEMBLY FOR FUEL OR PURIFYING AGENT OF A MOTOR VEHICLE

(30) Priorité: 07.02.2018 FR 1851012
(43) Date de publication de la demande: 16.12.2020
(73) Titulaire: PSA Automobiles SA, 78300 Poissy (FR)
(72) Inventeur: ERBA, Cedric, 25310 Thulay (FR)
(86) Numéro de dépôt international: PCT/FR2019/050217
(87) Numéro de publication internationale: WO 2019/155142

(56) Documents cités:
- EP-A2- 0 277 294
- DE-A1- 2 418 063
- DE-A1- 10 026 841
- DE-U1- 8 227 015
- KR-A- 20130 002 525
- US-A1- 2004 021 315

## Description

La présente invention porte sur un ensemble d'alimentation en carburant ou en produit de dépollution d'un véhicule automobile du type comprenant un boîtier de trappe de remplissage et une tubulure de réservoir.

De façon connue en soi, un système d'alimentation en carburant ou en liquide de dépollution d'un véhicule automobile comprend un réservoir de liquide, une tubulure de remplissage de carburant qui part du réservoir et se termine à proximité d'une ouverture prévue dans un panneau externe de la carrosserie. Un boîtier de trappe de remplissage disposé dans l'ouverture du panneau est conçu pour recevoir une tête de tubulure montée sur l'extrémité libre de la tubulure.

La tête de tubulure présente des dimensions définies auquel s'adapte le boîtier de trappe pour permettre un accostage étanche et visuellement esthétique. Ces deux pièces présentent des formes complémentaires lorsqu'elles sont conçues conjointement.

Toutefois, dans le cas où il devient nécessaire de modifier la configuration de la tête de tubulure, cela a une influence sur l'assemblage final. Ainsi, il peut apparaître un jeu périphérique autour de la tête de tubulure dans le cas où cette dernière présente un diamètre réduit. Cela implique un nouveau développement du boîtier de trappe pour combler le jeu périphérique. Il existe un problème analogue si la configuration du boîtier de trappe venait à être modifiée. Or cela est coûteux et génère une diversité de pièces pour les usines terminales de montage des véhicules automobiles.

Des autres ensembles d'alimentation en carburant ou en produit de dépollution d'un véhicule automobile sont connus des documents DE 24 18 063 A1, KR 2013 0002525 A et EP 0 277 294 A2.

L'invention vise à remédier efficacement à cet inconvénient en proposant un ensemble d'alimentation en carburant ou en produit de dépollution d'un véhicule automobile selon la revendication 1. L'ensemble comporte:
- un boîtier de trappe,
- une tête de tubulure destinée à s'insérer à l'intérieur d'une ouverture ménagée dans le boîtier de trappe,
- une tubulure connectée par une de ses extrémités à la tête de tubulure et par son autre extrémité à un réservoir de carburant ou de produit de dépollution,
l'ensemble comportant en outre une collerette d'obturation d'un espace entre une périphérie externe de la tête de tubulure et un bord du boîtier de trappe délimitant l'ouverture de passage de la tête de tubulure.

L'invention permet ainsi, en cas de modification de la configuration d'une des pièces parmi le boîtier de trappe ou la tête de tubulure, d'éviter d'avoir à adapter l'autre pièce en conséquence. En effet, même si ces deux pièces ne présentent plus des formes correspondantes, l'invention permet, grâce à la présence de la collerette, de conserver un ensemble esthétique et étanche.

Selon l'invention, la collerette comporte:
- une première portion de forme tubulaire destinée à être montée autour de la tête de tubulure, et
- une deuxième portion ayant une forme annulaire d'orientation radiale par rapport à un axe de la première portion tubulaire.

Selon l'invention, des ergots de maintien sont ménagés sur une périphérie interne de la première portion tubulaire.

Selon une réalisation, la deuxième portion est située dans un prolongement d'une extrémité axiale de la première portion tubulaire.

Selon une réalisation, la deuxième portion est destinée à venir en appui contre un épaulement de la tête de tubulure.

Selon une réalisation, la collerette est rapportée par rapport à la tête de tubulure.

Selon une réalisation, la tête de tubulure comporte une patte de fixation sur un élément structurel du véhicule automobile.

Selon une réalisation, la tête de tubulure est réalisée dans un matériau métallique.

Selon une réalisation, la collerette est réalisée dans un matériau plastique.

L'invention a également pour objet un véhicule automobile comprenant un ensemble d'alimentation en carburant ou en produit de dépollution tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une vue en perspective d'une tubulure et d'une tête de tubulure destinée à recevoir une collerette selon la présente invention;

La figure 2 est une vue en perspective d'une collerette selon la présente invention;

La figure 3 est une vue en perspective de l'ensemble selon l'invention comportant une collerette montée autour de la tête de tubulure de la figure 1 ;

La figure 4 est une vue de face d'un boîtier de trappe dans lequel sont montées la tête de tubulure et la collerette associée selon l'invention;

La figure 5 est une vue en perspective, depuis l'intérieur du véhicule, d'un boîtier de trappe dans lequel est monté la tête de tubulure et la collerette associée selon l'invention.

Les éléments identiques similaires ou analogues conservent la même référence d'une figure à l'autre.

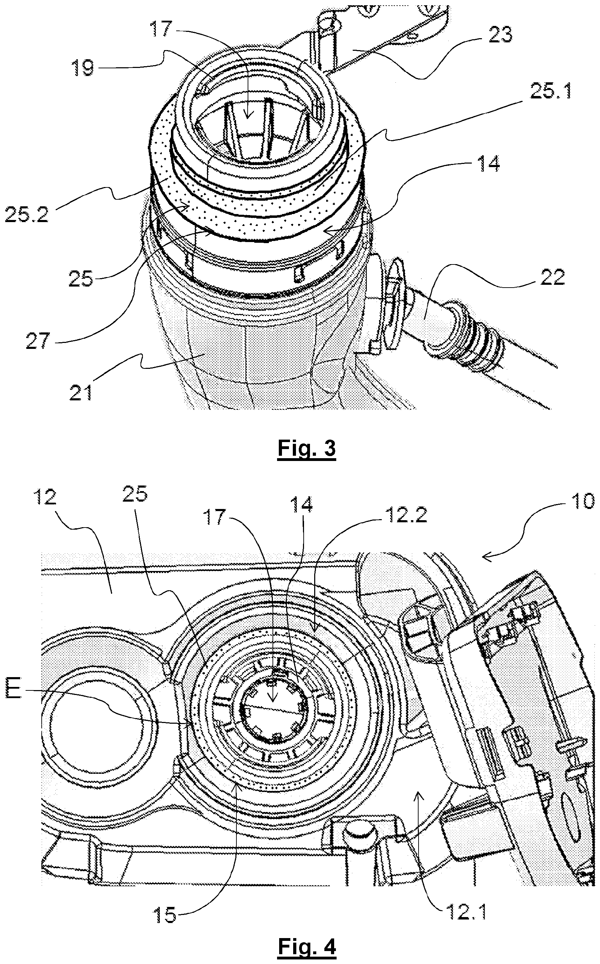

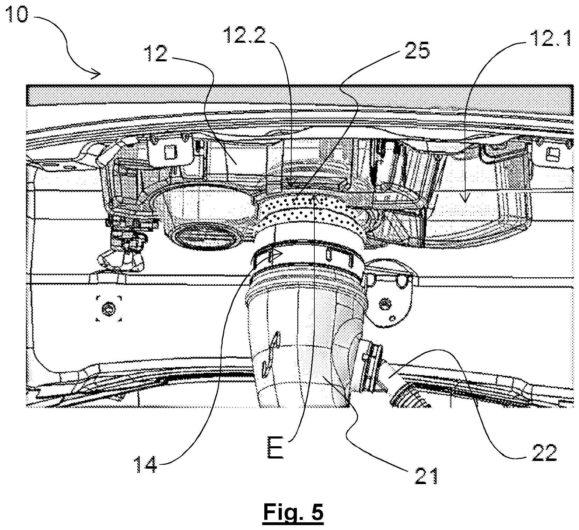

En référence aux dessins des figures 4 et 5, on a représenté un ensemble 10 d'alimentation en carburant d'un véhicule automobile selon la présente invention.

L'ensemble 10 comprend un boîtier de trappe 12 de remplissage de carburant monté sur la caisse du véhicule. Le boîtier de trappe 12 présente un corps principal 12.1, qui est réalisé en matière plastique rigide, et une partie centrale 12.2, de fond, par exemple de forme annulaire, qui est réalisée en matière souple de manière à favoriser le passage d'une tête de tubulure 14.

La tête de tubulure 14 est ainsi insérée à l'intérieur d'une ouverture 15 ménagée dans le boîtier de trappe 12 et plus précisément dans le fond 12.2 en matière souple qui est destiné à épouser la forme de la tête de tubulure 14.

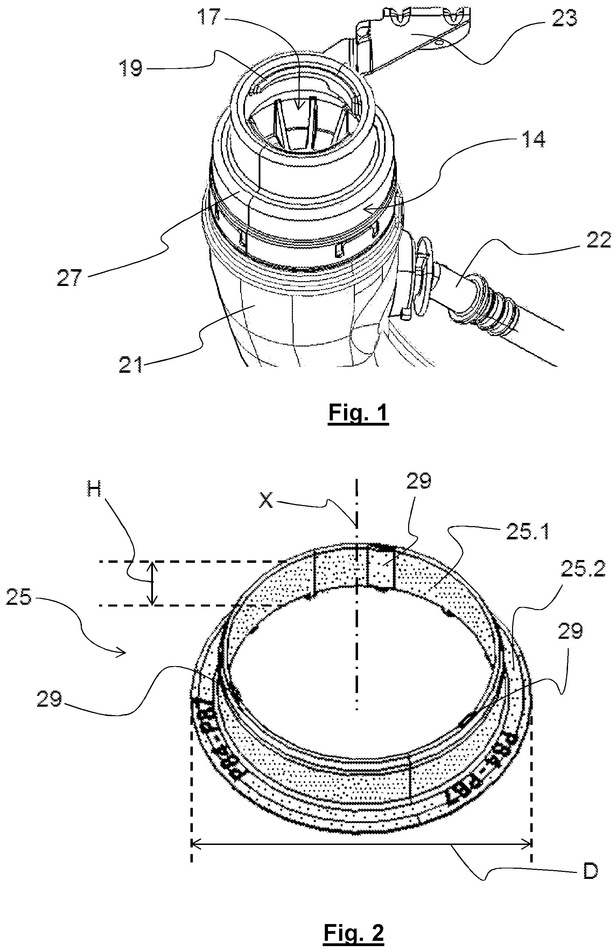

Cette tête de tubulure 14 creuse comporte un trou traversant 17, visible sur les figures 1, 3, et 4, destiné à recevoir un pistolet de remplissage de carburant (non représenté). Le trou traversant 17 débouche vers une tubulure 21 décrite plus en détails ci-après. La tête de tubulure 14 est obturable par un bouchon (non représenté) apte à coopérer avec une rampe 19 de verrouillage, par exemple de type quart de tour, ménagée dans une face interne de la tête de tubulure 14. En variante, la rampe 19 pourra être remplacée par un filet de vissage du bouchon.

Comme on peut le voir sur les figures 1, 3, et 5, une tubulure 21, par exemple de forme cylindrique, est connectée par une de ses extrémités à la tête de tubulure 14 et par son autre extrémité à un réservoir de carburant. Suivant un exemple de réalisation, la tête de tubulure 14 est fixée par un dispositif d'encliquetage sur l'extrémité libre de la tubulure 21. Une pipette de dégazage 22 débouchant d'une part dans le réservoir et d'autre part dans la tubulure 21 permet d'évacuer les vapeurs de carburant lors du remplissage du réservoir.

Afin d'assurer le maintien en position de la tête de tubulure 14, cette dernière comporte une patte de fixation 23 sur un élément structurel de la caisse du véhicule. La forme et les dimensions de la patte de fixation 23 sont adaptées en fonction de la configuration du véhicule au niveau du boîtier de trappe 12 susceptible de varier d'un modèle à l'autre.

La tête de tubulure 14 étant avantageusement réalisée dans un matériau métallique pour le respect des nouvelles normes antipollution, la patte de fixation 23 également en métal, pourra assurer une conductivité électrique avec la caisse pour évacuer l'électricité statique. On évite ainsi, pour des questions de sécurité, la création d'étincelles dans un environnement à forte présence de carburant.

En outre, comme cela est illustré par les figures 4 et 5, une collerette rapportée 25 assure l'obturation d'un espace E entre une périphérie externe de ladite tête de tubulure 14 et un bord du boîtier de trappe 12 délimitant l'ouverture de passage de ladite tête de tubulure 14.

La collerette d'obturation 25 bien visible sur la figure 2 comporte une première portion de forme tubulaire 25.1 destinée à être montée autour de la tête de tubulure 14, et une deuxième portion 25.2 ayant une forme annulaire d'orientation radiale par rapport à un axe X de la première portion tubulaire 25.1. La deuxième portion 25.2 s'étend ainsi dans un plan radial par rapport à l'axe X. Cette deuxième portion 25.2 présente une longueur radiale supérieure à son épaisseur axiale.

La deuxième portion 25.2 est située dans le prolongement de l'extrémité axiale de la première portion tubulaire 25.1 la plus éloignée du côté du trou 17 débouchant vers l'extérieur. La deuxième portion 25.2 est destinée à venir en appui contre un épaulement 27 de la tête de tubulure 14, tel que cela est montré sur les figures 1 et 3. Cet épaulement 27 est formé par une différence de diamètre de la périphérie externe de la tête de tubulure 14.

Avantageusement, la première portion tubulaire 25.1 présente un diamètre interne correspondant au diamètre externe de la portion d'extrémité de la tête de tubulure 14 délimité axialement par l'épaulement 27.

Afin d'assurer le maintien de la collerette 25 sur la tête de tubulure 14, des ergots de maintien 29 sont ménagés sur la périphérie interne de la première portion tubulaire 25.1, tel que cela est visible sur la figure 2. Les ergots 29 font saillie radialement vers l'intérieur de la collerette 25. L'effort de maintien pourra être adapté en fonction de la dimension des ergots 29 et de leur nombre. En l'occurrence, on utilise trois ergots 29 espacés angulairement entre eux de façon régulière. Toutefois, le nombre et la disposition des ergots 29 pourront varier en fonction de l'application.

La collerette 25 est réalisée de préférence dans un matériau plastique. Elle pourra être obtenue par exemple par moulage ou par injection. Il sera ainsi aisé de réaliser les formes de la portion annulaire radiale 25.2 et des ergots 29.

En variante, la collerette 25 pourra être fixée par collage sur la tête de tubulure 14 ou toute autre méthode de fixation adaptée. En variante, la collerette 25 peut être monobloc par rapport à la tête de tubulure 14 en étant surmoulée avec la tête de tubulure 14 qui serait alors bi-matière.

Les dimensions de la collerette 25, en particulier sa hauteur axiale H et son plus grand diamètre D correspondant au diamètre externe de la portion annulaire radiale 25.2 (cf. figure 2), sont adaptés en fonction de l'application et notamment en fonction des dimensions de la tête de tubulure 14 et de l'espace E à combler entre la tête de tubulure 14 et l'ouverture 15 du boîtier de trappe 12.

En variante, l'ensemble 10 assure une alimentation en produit de dépollution du véhicule automobile. Le produit de dépollution, stocké dans un réservoir correspondant, pourra prendre une forme liquide ou en poudre.

## Revendications

1. Ensemble (10) d'alimentation en carburant ou en produit de dépollution d'un véhicule automobile comportant:
- un boîtier de trappe (12),
- une tête de tubulure (14) destinée à s'insérer à l'intérieur d'une ouverture (15) ménagée dans ledit boîtier de trappe (12),
- une tubulure (21) connectée par une de ses extrémités à ladite tête de tubulure (14) et par son autre extrémité à un réservoir de carburant ou de produit de dépollution,
ledit ensemble (10) comportant en outre une collerette (25) d'obturation d'un espace (E) entre une périphérie externe de ladite tête de tubulure (14) et un bord du boîtier de trappe (12) délimitant l'ouverture (15) de passage de ladite tête de tubulure (14), ladite collerette (25) comportant :
- une première portion de forme tubulaire (25.1) destinée à être montée autour de la tête de tubulure (14), et
- une deuxième portion (25.2) ayant une forme annulaire d'orientation radiale par rapport à un axe (X) de la première portion tubulaire (25.1), **caractérisé en ce que** des ergots de maintien (29) sont ménagés sur une périphérie interne de la première portion tubulaire (25.1).

2. Ensemble selon la revendication 1, **caractérisé en ce que** la deuxième portion (25.2) est située dans un prolongement d'une extrémité axiale de la première portion tubulaire (25.1).

3. Ensemble selon l'une quelconque des revendications 1 ou 2, **caractérisé en ce que** la deuxième portion (25.2) est destinée à venir en appui contre un épaulement (27) de la tête de tubulure (14).

4. Ensemble selon l'une quelconque des revendications 1 à 3, **caractérisé en ce que** la collerette (25) est rapportée par rapport à la tête de tubulure (14).

5. Ensemble selon l'une quelconque des revendications 1 à 4, **caractérisé en ce que** la tête de tubulure (14) comporte une patte de fixation (23) sur un élément structurel du véhicule automobile.

6. Ensemble selon l'une quelconque des revendications 1 à 5, **caractérisé en ce que** la tête de tubulure (14) est réalisée dans un matériau métallique.

7. Ensemble selon l'une quelconque des revendications 1 à 6, **caractérisé en ce que** la collerette (25) est réalisée dans un matériau plastique.

8. Véhicule automobile **caractérisé en ce qu'**il comprend un ensemble (10) d'alimentation en carburant ou en produit de dépollution tel que défini selon l'une quelconque des revendications précédentes.

## Patentansprüche

1. Baugruppe (10) zum Zuführen von Kraftstoff oder Schadstoffminderungsprodukt zu einem Kraftfahrzeug, umfassend:
- ein Lukenkasten (12),
- einen Rohrkopf (14), der dazu bestimmt ist, in eine Öffnung (15) eingeführt zu werden, die in dem Lukengehäuse (12) hergestellt ist,
- ein Rohr (21), das mit einem seiner Enden mit dem Rohrkopf (14) und mit seinem anderen Ende mit einem Kraftstoff- oder Reinigungsprodukttank verbunden ist, wobei die Anordnung (10) ferner einen Kragen (25) umfasst, der einen Raum (E) zwischen einem Außenumfang des Rohrkopfs (14) und einer Kante des Lukengehäuses (12) abschließt, die die Öffnung (15) für den Durchgang begrenzt Rohrkopf (14), wobei der Bund (25) umfasst:
- einen ersten röhrenförmigen Abschnitt (25.1), der dazu bestimmt ist, um den Rohrkopf (14) montiert zu werden, und
- einen zweiten Abschnitt (25.2), der eine ringförmige Form mit radialer Ausrichtung relativ zu einer Achse (X) des ersten röhrenförmigen Abschnitts (25.1) aufweist, **dadurch gekennzeichnet, dass** Haltenasen (29) an einem Innenumfang des ersten röhrenförmigen Abschnitts (25.1) vorgesehen sind (25.1).

2. Anordnung nach Anspruch 1, **dadurch gekennzeichnet, dass** der zweite Abschnitt (25.2) in Verlängerung eines axialen Endes des ersten rohrförmigen Abschnitts (25.1) angeordnet ist.

3. Einheit nach einem der Ansprüche 1 oder 2, **dadurch gekennzeichnet, dass** der zweite Abschnitt (25.2) dazu bestimmt ist, an einer Schulter (27) des Rohrkopfes (14) anzuliegen.

4. Einheit nach einem der Ansprüche 1 bis 3, **dadurch gekennzeichnet, daß** der Kragen (25) am Kopf des Rohrs (14) befestigt ist.

5. Baugruppe nach einem der Ansprüche 1 bis 4, **dadurch gekennzeichnet, dass** der Rohrkopf (14) eine Befestigungslasche (23) an einem Strukturelement des Kraftfahrzeugs umfasst.

6. Einheit nach einem der Ansprüche 1 bis 5, **dadurch gekennzeichnet, dass** der Rohrkopf (14) aus einem metallischen Material hergestellt ist.

7. Einheit nach einem der Ansprüche 1 bis 6, **dadurch gekennzeichnet, daß** der Kragen (25) aus Kunststoffmaterial besteht.

8. Kraftfahrzeug, **dadurch gekennzeichnet, dass** es eine Baugruppe (10) zum Zuführen von Kraftstoff oder einem Reinigungsprodukt umfasst, wie es nach einem der vorhergehenden Ansprüche definiert ist

## Claims

1. Assembly (10) for supplying fuel or depollution product to a motor vehicle comprising:
- a hatch box (12),
- a pipe head (14) intended to be inserted inside an opening (15) made in said hatch housing (12),
- a pipe (21) connected by one of its ends to said pipe head (14) and by its other end to a fuel or depollution product tank, said assembly (10) further comprising a collar (25) closing off a space (E) between an outer periphery of said pipe head (14) and an edge of the hatch casing (12) delimiting the opening (15) for passage of said pipe head (14), said collar (25) comprising:
- a first portion of tubular shape (25.1) intended to be mounted around the pipe head (14), and
- a second portion (25.2) having an annular shape of radial orientation relative to an axis (X) of the first tubular portion (25.1), **characterized in that** retaining lugs (29) are provided on an internal periphery of the first tubular portion (25.1).

2. Assembly according to Claim 1, **characterized in that** the second portion (25.2) is located in an extension of an axial end of the first tubular portion (25.1).

3. Assembly according to any one of Claims 1 or 2, **characterized in that** the second portion (25.2) is intended to bear against a shoulder (27) of the pipe head (14).

4. Assembly according to any one of Claims 1 to 3, **characterized in that** the collar (25) is attached relative to the head of the pipe (14).

5. Assembly according to any one of Claims 1 to 4, **characterized in that** the pipe head (14) comprises a fixing lug (23) on a structural element of the motor vehicle.

6. Assembly according to any one of Claims 1 to 5, **characterized in that** the pipe head (14) is made of a metallic material.

7. Assembly according to any one of Claims 1 to 6, **characterized in that** the collar (25) is made of a plastic material.

8. Motor vehicle **characterized in that** it comprises an assembly (10) for supplying fuel or depollution product as defined according to any one of the preceding claims
